(19) **Europäisches Patentamt**

**European Patent Office**

**Office européen des brevets**

(11) **EP 1 609 808 A2**

(12) **EUROPEAN PATENT APPLICATION**

(43) Date of publication:
    **28.12.2005 Bulletin 2005/52**

(51) Int Cl.[7]: **C08G 18/08**, C08G 18/12,
    C08G 18/42, C09D 175/06

(21) Application number: **05012974.1**

(22) Date of filing: **16.06.2005**

(84) Designated Contracting States:
    **AT BE BG CH CY CZ DE DK EE ES FI FR GB GR
    HU IE IS IT LI LT LU MC NL PL PT RO SE SI SK TR**
    Designated Extension States:
    **AL BA HR LV MK YU**

(30) Priority: **25.06.2004 US 877885**

(71) Applicant: **Bayer MaterialScience LLC
    Pittsburgh PA 15205 (US)**

(72) Inventors:
    • **Gindin, Lyubov K.
      Pittsburgh, PA 15228 (US)**

    • **Roesler, Richard R.
      Wexford, PA 15090-7583 (US)**
    • **Konitsney, Ronald M.
      Midland, PA 15059-2045 (US)**
    • **McLafferty, John
      Hicksville, NY 11801 (US)**

(74) Representative: **Klimiuk, Meike et al
    Bayer MaterialScience AG
    Law & Patents
    Patents and Licensing
    51368 Leverkusen (DE)**

(54) **Polyurethane dispersion prepared from a high acid functional polyester**

(57)     An aqueous polyurethane dispersion (PUD) that includes an isocyanate functional prepolymer containing acid functional groups prepared by reacting a polyol containing carboxylic acid functionality and a polyisocyanate. The polyol has a molecular weight (Mn) of from 100 to 10,000, an acid number of 25 to 500 mg KOH/g and a hydroxyl number of from 25 to 500 mg KOH/g. The PUD can be used in coating compositions that also contain a cross-linking agent. The coating compositions can be used coat substrates by applying a mixture of the PUD and cross-linking agent to a surface of the substrates.

EP 1 609 808 A2

**Description**

## BACKGROUND OF THE INVENTION

1. Field of the Invention

The present invention relates to coating polyurethane dispersions, compositions containing such dispersions, as well as substrates coated with such coating compositions.

2. Description of the Prior Art

Polyurethane dispersions are used in the formulation of ambient-cure or bake coatings for a wide range of rigid and flexible substrates such as paper, wood, metal, vinyl-coated fabric, business machine housings, and other plastic parts. It is desirable that such coatings exhibit a combination of film hardness, flexibility, good water and abrasion resistance, and excellent solvent resistance.

Aqueous polyurethane dispersions are commercially important for a any number of reasons. First, from an environmental standpoint, they contain few, if any, volatile organic compounds ("VOC") that can be emitted into the atmosphere, causing ozone depletion, acid rain, and possibly a chemical imbalance of the earth's ecosphere. Second, from an economical standpoint, organic solvent systems tend to be expensive and aqueous polyurethane dispersions do not bear the extra solvent cost.

Conventional one-component (1 K) polyurethane dispersions typically do not provide the performance characteristics of two-component (2K) solvent-borne and 2K water-borne polyurethane based systems. Further and in many cases, the performance of conventional polyurethane dispersions can be improved by the addition of polyaziridine crosslinkers. However, such 1 K systems do not reach the performance of 2K systems.

U.S. Patent No. 5,177,141 to Thoma et al. discloses coating compositions containing an aqueous polyurethane dispersion, a watersoluble, polymeric thickening agent, a water-immiscible organic solvent, a cross-linking agent for the polyurethane, and a hydrophilic polyisocyanate which promotes the adhesion of the coating composition to substrates and is a cross-linking agent for the polyurethane dispersed in water. The polyurethane dispersed in water is rendered hydrophilic by carboxylate groups, sulphonate groups, pendant polyether chains having oxyethylene units and/or terminal polyether chains having oxyethylene units.

U.S. Patent No. 5.868,902 to Howland et al. discloses a method for producing security paper which includes applying to one or both sides of the sized paper an unpigmented polyurethane dispersion. The polyurethane dispersion can be a one component pre-crossed-linked polyurethane, a one component, blocked polyurethane or a two-component product which can be cross-linked by using multi-functional reagents such as a melamine/formaldehyde precondensate or polyaziridines.

U.S. Patent No. 6,447,895to Kamir et al. discloses a thermal stencil sheet including a radiation absorbing layer attached by means of an adhesive to a base layer, said radiation absorbing layer containing a resin based film having infrared (IR) absorbing material dispersed therein; and a thermal film overlaying said radiation absorbing layer. The resin based film can be derived from a polyurethane dispersion.

EP 0 778 156 discloses a multi-purpose imageable sheet that includes a base support and a surface coating on at least one side thereof, with the surface coating being formed from an aqueous-based coating formulation that contains an aqueous dispersion of (i) a crosslinkable polymer and a crosslinking agent therefore, and (ii) a pigment.

U.S. Patent No. 6,179,817 to Zhong discloses hybrid coatings for implantable medical devices that include a first layer of an aqueous dispersion or emulsion of an organic acid functional group containing polymer, a crosslinker and a therapeutic agent dispersed therein. The coating also includes a second layer of an aqueous solution or dispersion of an organic acid functional group-containing bio-active agent. The aqueous dispersion can include a polyurethane dispersion.

U.S. Patent No. 5,869,127 to Zhong discloses a method of enhancing the biocompatibility of a substrate by providing the substrate with a continuous bio-active surface coating. This method includes applying to the substrate a first coating which includes an aqueous dispersion or emulsion of a polymer containing an organic acid functional group and an excess of a polyfunctional cross-linking agent which is reactive with the organic acid groups of the polymer. The aqueous dispersion can include a polyurethane dispersion.

U.S. Patent No. 5,702,754 to Zhong discloses a catheter or a guide wire with a lubricous, hydrophilic abrasion-resistant coating. The coating includes an aqueous dispersion or emulsion of a polymer having organic acid functional groups and a polyfunctional crosslinking agent having functional groups capable of reacting with organic acid groups. The aqueous dispersion can include a polyurethane dispersion.

GB 2 242 682 discloses an electrically conductive water-based coating composition containing carbon black or other electrically conductive filler incorporated into an aqueous polyurethane elastomer dispersion.

U.S. Patent Nos. 5,439,969 and 5,500,253 to Sanduja et al. discloses a crosslinkable aqueous-based coating compositions that contains a crosslinkable polymer, a mono and/or polyethylenically unsaturated monomer which can be graft polymerized onto cellulose molecules, a water soluble peroxy free radical polymerization catalyst, a source of cations capable of creating free radical sites in the cellulose molecules and, optionally, a crosslinking agent for the crosslinkable polymer. The aqueous based composition can include a polyurethane dispersion.

U.S. Patent Nos. 3,759,873 and 3,882,189 to Hudak disclose polyester resins containing urethane linkages, including the reaction product of (1) a polyester prepared from at least one polycarboxylic acid and at least one polyhydric alcohol and (2) an organic polyisocyanate; or the reaction product of (1) a polyester prepared from at least one $\alpha,\beta$-ethylenically unsaturated polycarboxylic acid and at least one polyhydric alcohol, and (2) an organic polyisocyanate.

U.S. Patent No. 5,352,733 to Hart discloses a water based, solvent free, two component polyurethane-polyurea dispersion containing up to 65% solids. The first component is a polyester-polyol phase and an aqueous amine phase mixture. The polyester-polyol is a combination of modified polyester-polyols, low viscosity polyether or polyester-polyols, chain extending low molecular weight polyols, neutralizing amines and a detergent. It is totally hydroxyl functional with a carboxylic acid number of 10 and 50, an hydroxyl number of 180 and 300, an equivalent weight range of 165 and 365. The second component is a 100% solids aliphatic isocyanate. The ratio of NCO to functional groups in the polyester-polyol/amine component is from 1:1.3 to 1:1.7.

However, the compositions and resulting coatings described above, while having good performance properties for one or two attributes, do not provide good performance across the board for many attributes.

It would be desirable to provide polyurethane dispersions with increased levels of carboxylate functionality, which, when crosslinked with appropriate crosslinking agents, provide coatings having film hardness, flexibility, good water and abrasion resistance, and excellent solvent resistance.

## SUMMARY OF THE INVENTION

The present invention provides an aqueous polyurethane dispersion that includes an isocyanate functional prepolymer containing acid functional groups prepared by reacting a polyol containing carboxylic acid functionality and a polyisocyanate, wherein the polyol has a molecular weight (Mn) of from 100 to 10,000, an acid number of 25 to 500 mg KOH/g and a hydroxyl number of from 25 to 500 mg KOH/g.

The present invention is also directed to a two component coating composition that includes the above-described polyurethane dispersion as a first component (i) and a second component (ii) containing a cross-linking agent for the polyurethane which does not contain free isocyanate groups.

The present invention is further directed to a method of coating a substrate by (a) mixing components (i) and (ii) as described above to form a mixture; and (b) applying the mixture to a surface of the substrate. The invention is also directed to a substrate coated by the method.

## DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about."

As used herein the term "alkyl" refers to a monovalent radical of an aliphatic hydrocarbon chain of general formula $C_sH2_{s+1}$, where s is the number of carbon atoms, or ranges therefore, as specified. The term "alkylol" as used herein refers to an alkyl group where one or more hydrogens have been replaced with a hydroxyl group.

As used herein, the term "alkylene" refers to acyclic or cyclic divalent hydrocarbons having a carbon chain length of from $C_1$ (in the case of acyclic) or $C_4$ (in the case of cyclic) to $C_{25}$, typically $C_2$ to $C_{12}$, which may be substituted or unsubstituted, and which may include substituents. As a non-limiting example, the alkylene groups can be lower alkyl radicals having from 1 to 12 carbon atoms. As a non-limiting illustration, "propylene" is intended to include both n-propylene and isopropylene groups; and, likewise, "butylene" is intended to include both n-butylene, isobutylene, and t-butylene groups.

As used herein, the term "(meth)acrylic" and "(meth)acrylate" are meant to include the corresponding derivatives of acrylic acid and methacrylic acid, without limitation.

As used herein, the term "cure" (or "curing") is intended to include both crosslinking of the adhesive, sealant, or coating composition components and film formation as a result of evaporation of water and, if present, other solvents and diluents along with the development of physical and chemical properties in the resultant film such as bond strength and peel strength.

As used herein, the term "polyol" is intended to include materials that contain two or more hydroxyl groups. Non-limiting examples of polyols include diols, triols, polyether polyols, polyacrylate polyols, polyester polyols, polycarbonate polyols, and combinations thereof.

As used herein, the term "polyamine" is intended to include materials that contain two or more amine (primary and/or secondary) functional groups. Non-limiting examples of polyamines include diamines, such as ethylene diamines, propylene diamines, isophorone diamines, and 1,6-diaminohexane, triamines such as diethylene triamine, higher amines, such as triethylene tetramine, tetraethylene pentamine, and pentaethylene hexamine; as well as polyether amines, such as the JEFFAMINE® D series and JEFFAMINE® T series products available from Huntsman Corporation, Houston, Texas.

The present invention provides an aqueous polyurethane dispersion that includes an isocyanate functional prepolymer containing acid functional groups prepared by reacting a polyol containing carboxylic acid functionality and a polyisocyanate.

Any suitable polyol can be used to make the present polyurethane dispersion. Suitable polyols include, but are not limited to polyester polyols, polyether polyols, polyhydroxy polycarbonates, polyhydroxy polyacetals, polyhydroxy polyacrylates, polyhydroxy polyester amides, polyhydroxy polythioethers, and mixtures thereof.

In an embodiment of the invention, the polyol includes a 2,2-bis-(hydroxy-methyl)-alkanecarboxylic acid having at least five carbon atoms. In a particular embodiment of the invention the 2,2-bis-(hydroxy-methyl)-alkanecarboxylic acid is 2,2-bis-(hydroxymethyl)-propionic acid, dimethylolpropionic acid, 2,2-bis-(hydroxymethyl)-butanoic acid, and/or dimethylolbutanoic acid.

Non-limiting examples of suitable polyester polyols include reaction products of polyhydric, in some cases dihydric alcohols to which trihydric alcohols may be added and polybasic, in some cases dibasic carboxylic acids. Instead of these polycarboxylic acids, the corresponding carboxylic acid anhydrides or polycarboxylic acid esters of lower alcohols or mixtures thereof may be used for preparing the polyesters. The polycarboxylic acids can be aliphatic, cycloaliphatic, aromatic and/or heterocyclic and they can be substituted, e.g. by halogen atoms, and/or unsaturated. Non-limiting examples of suitable polycarboxylic acids include succinic acid; adipic acid; suberic acid; azelaic acid; sebacic acid; phthalic acid; isophthalic acid; trimellitic acid; phthalic acid anhydride; tetrahydrophthalic acid anhydride; hexahydro-phthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Non-limiting examples of suitable polyhydric alcohols include, e.g. ethylene glycol; propylene glycol-(1,2) and -(1,3); butylene glycol-(1,4) and -(1,3); hexanediol-(1,6); octanediol-(1,8); neopentyl glycol; cyclohexanedimethanol (1,4-bis-hydroxymethyl-cyclohexane); 2-methyl-1,3-propanediol; 2,2,4-trimethyl-1,3-pentanediol; triethylene glycol; tetraethylene glycol; polyethylene glycol; dipropylene glycol; polypropylene glycol; dibutylene glycol and polybutylene glycol, glycerine and trimethlyolpropane.

In an embodiment of the invention, the polyester polyols include a polyesterpolyol including one or more repeat units from a 2,2-bis-(hydroxymethyl)-alkanecarboxylic acid having at least five carbon atoms. In a particular embodiment of the invention, the 2,2-bis-(hydroxy-methyl)-alkanecarboxylic acid is 2,2-bis-(hydroxymethyl)-propionic acid, dimethylolpropionic acid, 2,2-bis-(hydroxymethyl)-butanoic acid, and/or dimethylolbutanoic acid.

As used herein, the terms "polyhydroxy polyacrylates," "(meth)acrylic" and "(meth)acrylate" are meant to include both acrylic and methacrylic acid derivatives, such as the corresponding alkyl and alkylol esters often referred to as acrylates and (meth)acrylates, which the term (meth)acrylate is meant to encompass.

Suitable (meth)acrylic polyols include those prepared by polymerizing suitable hydroxy functional (meth)acrylic esters using known polymerization techniques. Suitable hydroxy functional (meth)acrylic esters include, but are not limited to, hydroxy ethyl (meth)acrylate and hydroxypropyl (meth)acrylate. Additionally, other hydroxy functional polymerizable monomers can be copolymerized with the hydroxy functional (meth)acrylic esters. Non-limiting examples of such hydroxy functional polymerizable monomers include allyl alcohol and glycerol allyl ether.

Polymerizable alkyl and alkylol esters and vinylic monomers can be copolymerized to give a variety of hydroxy functional poly(meth)acrylic resins that can be used as (meth)acrylic polyols in the invention. Suitable (meth)acrylic alkyl esters that can be used include, but are not limited to, methyl (meth)acrylate, ethyl (meth)acrylate, butyl (meth) acrylate and dodecyl (meth)acrylate as well as the hydroxyl functional (meth)acrylates indicated above. Additionally, other vinylic comonomers may be used in preparing the hydroxy functional poly(meth)acrylic resins. These vinylic comonomers include, but are not limited to, styrene, alpha-methyl styrene, cinnamyl esters, diethyl maleate, vinyl acetate, allyl propionate and the like.

Non-limiting examples of suitable polyether polyols that can be used in the present invention include those described, for example, in EP-A 283 148 and U.S. Patent Nos. 3,278,457, 3,427,256, 3,829,505, 4,472,560, 3,2178,458, 3,427,334, 3,941,849, 4,721,818, 3,278,459, 3,427,335, and 4,355,188.

Suitable polyhydroxy polycarbonates include those known per se such as the products obtained from the reaction of diols such as propanediol-(1,3), butanediol-(1,4) and/or hexanediol-(1,6), diethylene glycol, triethylene glycol or tetraethylene glycol with phosgene, diaryl-carbonates such as diphenylcarbonate or with cyclic carbonates such as ethylene or propylene carbonate. Also suitable are polyester carbonates obtained from the above-mentioned polyesters or polylactones with phosgene, diaryl carbonates or cyclic carbonates.

Also, examples of suitable polyhydroxy polyethers, polyhydroxy polyacetals, polyhydroxy polyacrylates, polyhydroxy polyester amides, polyhydroxy polyamides and polyhydroxy polythioethers that can be used in the invention are disclosed in U.S. Patent No. 4,701,480 to Markusch et al.

The polyol used to make the polyurethane dispersion has a molecular weight (Mn) of at least 100, in some cases at least 200, in other cases at least 300, in some situations at least 400 and in other situations at least 500. Also, the Mn of the polyol can be up to 10,000, in some cases up to 8,000, in other cases up to 7,000, in some situations up to 6,000, and in other situations up to 5,000. The Mn of the polyol can be any value or range between any of the values recited above.

Unless otherwise specified, molecular weights referred to herein are number average molecular weights. Molecular weight can be determined by gel permeation chromatography (GPC) using appropriate standards, typically polystyrene, as well by titration of the functional groups of the polymer.

At least a portion of the polyols used to make the polyurethane dispersion have an acid number of at least 25, in some cases at least 50, in other cases at least 60, in some situations at least 75 and in other cases at least 100 or 101 mg KOH/g. When the acid number is too low, the polyurethane particles in the dispersion may not remain stably dispersed for a sufficiently long period of time. Also, the acid number of the polyol can be up to 500, in some cases up to 400, in other cases up to 300, in some situations up to 250, and in other situations up to 200 mg KOH/g. When the acid number is too high, the resulting polyurethane may become too hydrophilic and not provide desired properties. The acid number of the polyol can be any value or range between any of the values recited above.

The polyols used to make the polyurethane dispersion have and a hydroxyl number of from at least 25, in some cases at least 50, in other cases at least 75 and in some situations at least 100 mg KOH/g. Also, the polyol can have a hydroxyl number of up to 500, in some cases up to 400, in other cases up to 300, and in some situations up to 200 mg KOH/g. The hydroxyl number of the polyol can be any value or range between any of the values recited above.

The acid number and hydroxyl number are determined using methods readily known in the art.

Any suitable polyisocyanate can be used to make the present aqueous polyurethane dispersion. Suitable polyisocyanates include, but are not limited to aliphatic, cycloaliphatic, araliphatic and/or aromatic polyisocyanates containing from 2 to 5 isocyanate groups.

In an embodiment of the invention, the polyisocyanates include one or more polyisocyanates selected from 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4-trimethyl-1,6-diisocyanatohexane, 2,4,4-trimethyl-1,6-diisocyanatohexane, 1,10-diisocyanatodecane, 1,3- diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, $\omega,\omega'$-diisocyanato-1,3-dimethylcyclohexane, 1-isocyanato-1-methyl-3-isocyanatomethylcyclohexane, 1-isocyanato-1-methyl-4-isocyanatomethylcyclohexane, bis-(isocyanatomethyl)norbornane, 1,5-naphthalene diisocyanate, 1,3- bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

In another embodiment of the invention, The polyisocyanates include one or more polyisocyanate adducts containing biuret, urethane, uretdione, allophanate, isocyanurate, and/or iminooxadiazinedione groups.

Non-limiting examples of biuret group-containing polyisocyanates include those prepared according to the processes disclosed in U.S. Pat. Nos. 3,124,605; 3,358,010; 3,644,490; 3,862,973; 3,906,126; 3,903,127; 4,051,165; 4,147,714; or 4,220,749; the pertinent portions of which are herein incorporated by reference, by using co-reactants such as water, tertiary alcohols, primary and secondary monoamines, and primary and/or secondary diamines. These polyisocyanates can have an NCO content of 18 to 22% by weight and an average NCO functionality of from 3 to 3.5.

Non-limiting examples of urethane group-containing polyisocyanates include those prepared in accordance with the process disclosed in U.S. Pat. No., 3,183,112; the pertinent portions of which are herein incorporated by reference, by reacting excess quantities of polyisocyanates, in some cases diisocyanates, with low molecular weight glycols and polyols having molecular weights of less than 400, such as trimethylol propane, glycerine, 1,2-dihydroxy propane and mixtures thereof. The urethane group-containing polyisocyanates can have an NCO content of 12 to 20% by weight and an (average) NCO functionality of 2.5 to 3.

Non-limiting examples of uretdione diisocyanates include those prepared by oligomerizing a portion of the isocyanate groups of a diisocyanate in the presence of a suitable catalyst, e.g., a trialkyl phosphine catalyst, and which can be used in admixture with other aliphatic and/or cycloaliphatic polyisocyanates, particularly the isocyanurate group-containing polyisocyanates set forth above.

Non-limiting examples of allophanate group-containing polyisocyanates include those prepared according to the processes disclosed in U.S. Pat. Nos. 3,769,318, 4,160,080 and 4,177,342; the pertinent portions of which are herein incorporated by reference. The allophanate group-containing polyisocyanates can have an NCO content of from 12 to 21 % by weight and an (average) NCO functionality of 2 to 4.5.

Non-limiting examples of isocyanurate and allophanate group-containing polyisocyanates include those prepared in accordance with the processes set forth in U.S. Pat. Nos. 5,124,427; 5,208,334; and 5,235,018; the pertinent portions of which are herein incorporated by reference. Such polyisocyanates can contain these groups in a ratio of morioisocyanurate groups to mono-allophanate groups of about 10:1 to 1:10, in some cases about 5:1 to 1:7.

Non-limiting examples of iminooxadiazine dione and optionally isocyanurate group-containing polyisocyanates include those that can be prepared in the presence of special fluorine-containing catalysts as described in U. S. Pat. No. 5,914,383; the pertinent portions of which are herein incorporated by reference. These polyisocyanates generally have an average NCO functionality of 3 to 3.5 and an NCO content of 5 to 30%, in some cases 10 to 25% and in other cases 15 to 25% by weight.

The polyurethane dispersion can have any suitable solids content. Thus, the dispersion can have a solids content of at least 5%, in some cases at least 10%, in other cases at least 15%, in some situations at least 20%, in other situations at least 25% based on the weight of the dispersion. When the solids are too low, poor coating properties may result. Also, the dispersion can have a solids content of up to 70%, in some cases up to 60%, in other cases up to 50%, and in some situations up to 40% based on the weight of the dispersion. When the solids are too high, the viscosity of the dispersion may be too high. The actual solids level can also be dictated by the composition of the dispersed polyurethane as well as the particle size of the dispersed particles. The solids content of the dispersion can be any value or range between any values recited above.

Based on the nature of the polyols and polyisocyanates employed, the polyurethane in the present polyurethane dispersion will have a measurable acid number. The acid number of the polyurethane can be at least 27, in some cases at least 30, in other cases at least 50 and in some situations at least 65 mg KOH/g. When the acid number is too low, the dispersed particles may not remain stably dispersed for a sufficiently long period of time. Also, the acid number of the polyurethane can be up to 240, in some cases 200, in other cases at least 200, in some situations up to 150 and in other situations up to 100 mg KOH/g. When the acid number is too high, the polyurethane may be too hydrophilic. The acid number of the polyurethane in the polyurethane dispersion can be any value or range between any of the values recited above.

In an embodiment of the invention, the acid groups of the polyurethane can be neutralized using a suitable neutralizing agent. Suitable neutralizing agents include, but are not limited to amines and/or alkali metal hydroxides. In a particular embodiment of the invention, the amine neutralizing agents can be tertiary amines selected from N-methyl morpholine, trimethyl amine, triethylamine, triethanol amine, pyridine, methylpyridine, benzyldimethylamine, N, N-endoethylenepiperazine, N-methylpiperidine, pentamethyldiethylenetriamine, N,N-dimethylaminocyclohexane, N, N'-dimethylpiperazine, N,N-dimethylbenzylamine, and combinations thereof.

In an embodiment of the invention, after the polyol and polyisocyanate are reacted to form a prepolymer, at least one hydroxy or amine functional chain extender is reacted with the prepolymer.

In a particular embodiment of the invention, the hydroxy functional chain extender is a polyol.

In another particular embodiment of the invention, the amine functional chain extender is a polyamine.

In an embodiment of the invention, the polyurethane dispersion includes dispersed particles containing a polyurethane as indicated above. The average particle size (weight average) of the particles in the polyurethane dispersion can be at least 0.001, in some cases at least 0.01, and in other cases at least 0.1 μm. When the particle size is too low, the viscosity of the dispersion may be too high. Also, the average particle size can be up to 50, in some cases up to 40, in other cases up to 30, in some instances up to 20, in other instance up to 10, and in some situations up to 3 μm. When the particle size of the dispersion is too high, the particles may settle from the dispersion and/or the resulting coating may be non-uniform. The particle size can be any value or range between any values recited above. Particle size is determined using light scattering, as a non-limiting example on a HORIBA® LA-91 0 or LB-500 particle size analyzer available from HORIBA Laboratory Products, Irvine, CA.

The present invention also provides a coating composition that includes the above-described polyurethane dispersion and a cross-linking agent for the polyurethane which does not contain free isocyanate groups. In an embodiment of the invention, the coating composition has two components, where the dispersion is present as a first component (i) and a second component (ii) includes the cross-linking agent for the polyurethane which does not contain free isocyanate groups.

Any suitable crosslinking agent for the polyurethane which does not contain free isocyanate groups can be used in the invention. Suitable cross-linking agents include, but are not limited to urea resins, melamine resins, urea/melamine resins, polyepoxides, polyaziridines, polycarbodiimides and mixtures thereof.

In a particular embodiment of the invention, the cross-linking agent includes a polyaziridine. Suitable polyaziridines include, but are not limited to those disclosed in U.S. Patent Application Publication Nos. 2004/0087763, 2004/0087762, and 2003/0208033, the relevant portions of which are incorporated herein by reference.

In an embodiment of the invention, the coating composition and/or one or both of component (i) and component (ii) further include one or more additives selected from solvents, leveling agents, wetting agents, flow control agents, antiskinning agents, antifoaming agents, fillers, viscosity regulators, plasticizers, pigments, catalysts, dyes, UV absorbers, light stabilizers, and stabilizers against thermal and oxidative degradation.

Non-limiting examples of suitable solvents that can be used in the invention include N-methylpyrrolidone, $C_1$ to $C_8$ linear, branched or cyclic alcohols, a non-limiting example being n-butanol, dimethyl(diethyl)glycol, dimethyl (diethyl)diglycol, tetrahydrofuran, dimethyl dipropylene glycol, diethyl dipropylene glycol, dipropylene glycol monomethyl ether, dipropylene glycol monomethyl ether, dimethyl propylene glycol, diethyl propylene glycol, propylene glycol monomethyl ether, propylene glycol monomethyl ether, propylene glycol monomethyl ether acetate, propylene glycol monoethyl ether acetate, ethyl acetate, n-propyl acetate, isopropyl acetate, n-butyl acetate, n-hexyl acetate, n-heptyl acetate, 2-ethylhexyl acetate, methoxypropyl acetate, methyl ethyl ketone, methyl isobutyl ketone, toluene, xylene, white spirits, N-methyl-2-pyrrolidone, and mixtures thereof. Solvents are typically used only in the smallest possible amount, if at all, for reasons of environmental compatibility. The amount of solvent typically does not exceed 40 wt.%. In embodiments of the invention, the amount of solvent can be at least 0.1 wt.%, in some cases at least 0.5 wt.% in other cases at least 1 wt.%, and in some instances at least 2 wt.%. In some instances, when the solvent is too low, the viscosity of the coating composition can be too high. Also, the amount of solvent can be up to 40 wt.%, in some cases up to 35 wt.%, in other cases up to 30 wt.%, in some instance up to 25 wt.% in other instances up to 20 wt. %, in some situations up to 15 wt.% and in other situations up to 10 wt.% based on the sum of polyurethane resin and solvent. Viscosity and VOC requirements of the coating composition will often dictate the upper limit for the amount of solvent that can be used. The amount of solvent can be any value recited above or vary between any of the values recited above.

Non-limiting examples of plasticizers that can be used in the present invention include dioctyl phthalate (DOP) dibutyl phthalate (DBP); diisodecyl phthalate (DIDP); dioctyl adipate isodecyl malonate; diethylene glycol dibenzoate, pentaerythritol ester; butyl oleate, methyl acetylricinoleate; tricresyl phosphate and trioctyl phosphate; polypropylene glycol adipate and polybutylene glycol adipate; and the like. Such plasticizers can be used alone or in combination of two or more.

Non-limiting examples of catalysts, which may be used for curing, that can be used in the present invention include titanate esters, e.g., those of tetrabutyl titanate and tetrapropyl titanate; organotin compounds, e.g., dibutyl tin dilaurate, dibutyl tin maleate, dibutyl tin diacetate, tin octylate and tin naphthenate; lead octylate; amine-based compounds and salts of these compounds and carboxylates, e.g., butylamine, octylamine, dibutylamine, monoethanolamine, diethanolamine, triethanolamine, diethylenetriamine, triethylenetetramine, oleylamine, octylamine, cyclohexylamine, benzylamine, diethylaminopropylamine, xylylenediamine, triethylenediamine, guanidine, diphenylguanidine, 2,4,6-tris(dimethylaminomethyl) phenol, morpholine, N-methyl morpholine, and 1,3-diazabicyclo(5,4,6) undecene-7 (DBU); low-molecular-weight polyamide resins produced by the reactions between excessive quantities of polyamines and polybasic acids; products of the reactions between excessive quantities of polyamines and epoxy compounds; and known silanol condensing catalysts, e.g., silane coupling agents containing amino group (e.g., γ-aminopropyl trimethoxy silane and N-(β-aminoethyl)aminopropyl methyldimethoxy silane). These compounds may be used either individually or in combination. In an embodiment of the invention, the catalyst includes N,N-dimethylbenzylamine, N-methylmorpholine, zinc octoate, tin(II) octoate, monobutyltin dihydroxychloride, and/or dibutyltin dilaurate.

Non-limiting examples of leveling agents that can be used in the present invention include cellulose, e.g., nitrocellulose and cellulose acetate butyrate.

Non-limiting examples of wetting agents that can be used in the present invention include glycols, silanes, anionic surfactants, and any other wetting agents known in the art. A non-limiting example of wetting agents and dispersants that can be used in the present invention include those available under the trade name DISPERBYK®, available from Byk Chemie, Wallingford, CT.

Non-limiting examples of flow control agents, that can be used in the present invention include polyacrylic esters, non-ionic fluorinated alkyl ester surfactants, non-ionic alkylarylpolyether alcohols, silicones, and the like, as well as those available under the trade name RESIFLOW® by Estron Chemical, Inc., Parsippany, NJ, those sold under the trade name Benzoin® by DSM, Inc., ; those available under the trade name MODAFLOW® from Monsanto and those available under the trade name SURFYNOL® available from Air Products, Bethlehem, PA.

Non-limiting examples of antifoaming agents that can be used in the present invention include those available as FOAMSTAR® (in particular I 305 and A10) from Cognis Corp. USA, Ambler, PA, those available as FOAMEX® from Rohm and Haas Company, Philadelphia, PA, those available under the trade name BYK®, available from BYK-Chemie USA, Wallingford, CT, and those available under the trade name FoamBrake® from BASF Corp., Mount Olive, NJ.

Non-limiting examples of fillers include fumed silica, settling silica, silicic anhydride, silicic hydrate, talc, limestone powder, kaolin, diatomaceous earth, fired clay, clay, bentonite, organic bentonite, zinc oxide, activated zinc white, and fibrous fillers such as glass fibers or filaments. The filler can have any suitable particle size, in an embodiment of the invention, the filler particle size can be from 5 nm to 10 μm, in some cases 10 nm to 5 μm, and in other cases from 25 nm to 1 μm.

Non-limiting examples of viscosity regulators that can be used in the present invention include alkali-soluble, acid-soluble, and hydrophobically-modified alkali-soluble or acid-soluble emulsion polymers, those available as ACRYSOL® from Rohm and Haas Company, cellulosics, modified cellulosics, natural gums, such as xanthan gum, and the like. Included as viscosity regulators are polymers and dispersing aids that provide for high pigment loads at low viscosity, such as BYK® 410, BYK-Chemie Gmbh, Wesel, Germany.

Non-limiting examples of pigments, that can be used in the present invention include carbon black, titanium dioxide, calcium carbonate, iron oxide, aluminum trihydroxide, mica, calcium metasilicate, silica and magnesium carbonate.

Non-limiting examples of dyes that can be used in the present invention include mordant dyes, i.e., dyes prepared from plants, insects, and algae, and direct dyes, non-limiting examples being those based on benzidine or benzidine derivatives.

Non-limiting examples of ultra violet light absorbers that can be used in the present invention include benzotriazole-based ultra violet ray absorbers, salicylate-based ultraviolet ray absorbers, benzophenone-based ultraviolet ray absorbers, hindered amine-based light stabilizers and nickel-based light stabilizers. In a particular embodiment of the invention, hindered amine-based light stabilizers are used, such as those available under the trade name TINUVIN® from Ciba Specialty Chemicals, Basel, Switzerland.

Non-limiting examples of thermal stabilizers that can be used in the present invention include HCl scavengers, a non-limiting example being epoxidized soybean oil, esters of beta-thiodipropionic acid, non-limiting examples being lauryl, stearyl, myristyl or tridecyl esters, mercaptobenzimidazole, the zinc salt of 2-mercaptobenzimidazole, zinc dibutyl-dithiocarbamate, dioctadecyl disulfide, pentaerythritol tetrakis-(beta-dodecylmercapto)-propionate, and lead phosphate.

Non-limiting examples of antioxidants that can be used in the present invention include 2,6-di-t-butyl phenol, 2,4-di-t-butyl phenol, 2,6-dit-butyl-4-methyl phenol, 2,5-di-t-butylhydroquinone, n-octadecyl-3-(3,5-di-t-butyl-4-hydroxyphenyl)propionate, pentaerythrityl-tetrakis[3-(3,5-di-t-butyl-4-hydroxyp- henyl) propionate], 2,2'-methylenebis(4-methyl-6-t-butyl phenol), 4,4'-butylidenebis(3-methyl-6-t-butyl phenol), 4,4'-thiobis(3-methyl-6- -t-butyl phenol), N,N'-diphenyl-p-phenylenediamine, 6-ethoxy-2,2,4-trimethyl-1,2- -dihydroquinoline and the antioxidants available under the trade name IRGANOX® from Ciba Specialty Chemicals, Basel, Switzerland.

The present invention also provides a method of coating a substrate that includes :

(a) mixing components (i) and (ii)described above to form a mixture; and
(b) applying the mixture to a surface of the substrate.

In an embodiment of the invention, the substrate can be paper, wood, metal, vinyl-coated fabric, business machine housings, and other plastic parts.

The mixture can be applied by conventional means including spraying, pouring, flow coating, brushing, squirting or rolling, as is known in the art.

Upon application to a substrate, the composition is allowed to coalesce to form a substantially continuous film on the substrate, which can then be cured. The film can be formed on the surface of the substrate by driving off liquids out of the film by heating or by an air drying period.

The applied coating can be cured at ambient temperatures or it can be heated to temperatures of from 100°C to 200°C, and in some cases 120°C to 160°C to cure the surface films applied. The curing time can be from 1 to 120 minutes, in some cases from10 to 60 minutes, and in other cases from 15 to 45 minutes depending on the composition and the temperature.

The present invention is more particularly described in the following examples, which are intended to be illustrative only, since numerous modifications and variations therein will be apparent to those skilled in the art. Unless otherwise specified, all parts and percentages are by weight.

Examples

The starting materials indicated below will be referred to as shown.

Polyol 2    TERATHANE® 2000 polyether, available from E.I. DuPont De Nemours, Wilmington, DE.
Polyol 3    DESMOPHEN® 225B polyester, available from Bayer Polymers LLC, Pittsburgh, PA.
Polyol 4    DESMOPHEN® 170HN polyester, available from Bayer Polymers LLC, Pittsburgh, PA.
Polyol 5    DESMOPHEN® D-2020E polycarbonate diol, available from Bayer Polymers LLC, Pittsburgh, PA.
BDO    1,4-Butanediol
NPG    Neopentylglycol
Des W    DESMODUR® W, diisocyanate available from Bayer Polymers LLC, Pittsburgh, PA.
Des I    DESMODUR® I, diisocyanate available from Bayer Polymers LLC, Pittsburgh, PA.
Des H    DESMODUR® H, diisocyanate available from Bayer Polymers LLC, Pittsburgh, PA.
LB 25    Polyether LB 25, available from Bayer Polymers LLC, Pittsburgh, PA.

T-12      Dibutyltin dilaurate
TEA      Triethylamine
NMP     N-Methylpyrrolidone
EDA      Ethylenediamine
DETA    Diethylenetriamine

Example 1

This example demonstrates the synthesis of an acid functional polyester (AFP1) for use in preparing polyurethane dispersions according to the present invention. To a nitrogen-purged 2-liter flask equipped with a thermocouple-controlled heating mantle, condenser, and stirring blade, 2270g hexanediol, 1333g NPG and 5266g adipic acid were added. While stirring, when the temperature reached 140°C 1131g of dimethylolpropionic acid (DMPA) was added and the components mixed for 16 hours at 150°C. The temperature was raised to 180°C and vacuum was applied until the acid value was between 57-59 mg KOH/g. The product was 100% pure with a viscosity of 4370 cps at 60°C determined using a BROOKFIELD® Viscometer, LVF, spindle no. 3, 60 rpm, at 60°C (Brookfield Engineering Laboratories, Inc., Stoughton, MA), hydroxyl number of 55.5 mg KOH/g and acid number of 58 mg KOH/g.

Example 2

This example demonstrates the synthesis of an acid functional polyester (AFP2) for use in preparing polyurethane dispersions according to the present invention. AFP2 was prepared as in example 1 except that the DMPA was adjusted to provide an acid number of 27 mg KOH/g. The product was 100% pure with a viscosity of 4400 cps at 60°C (as measured above), and hydroxyl number of 58 mg KOH/g.

Examples 3-9

These examples demonstrate the synthesis of prepolymers for use in preparing polyurethane dispersions according to the present invention. Using the ingredients shown in the table below, to a nitrogen-purged 1-liter flask equipped with a thermocouple-controlled heating mantle, condenser, and stirring blade, NMP (NMP1), NPG (as indicated), AFP1, LB 25, and T-12 were mixed and heated to 65-70°C until all solids were dissolved. Next isocyanate was added and the mixture allowed to exotherm and heated to 90-95°C for 1.75 hours or until the NCO level was determined to be constant or below the theoretical value. The reaction mixture was then cooled to 70°C and TEA in NMP (NMP2) was added to neutralize the carboxyl groups and mixed for 15 minutes. When perylenes dye was used, it was mixed into the prepolymer for 15 minutes. Unless otherwise indicated, all entries are in grams.

| Ingredients | Ex. 3 | Ex. 4 | Ex. 5 | Ex. 6 | Ex. 7 | Ex. 8 | Ex. 9 |
|---|---|---|---|---|---|---|---|
| **NMP1** | 87.7 | 47.2 | 162.3 | 165.1 | 164.7 | 166 | 89.7 |
| **BDO** | 0 | 0 | 0 | 0 | 3 | 1.4 | 0 |
| **NPG** | 20.9 | 2.9 | 22.6 | 0 | 0 | 0 | 32.7 |
| **AFP1** | 246.3 | 133.7 | 251 | 250.5 | 502.2 | 503.4 | 214.1 |
| **Polyol 2** | 0 | 0 | 205.5 | 0 | 0 | 0 | 0 |
| **Polyol 3** | 0 | 0 | 0 | 263.7 | 0 | 0 | 0 |
| **Polyol 4** | 0 | 0 | 0 | 0 | 24.3 | 0 | 0 |
| **Polyol 5** | 0 | 0 | 0 | 0 | 0 | 31 | 0 |
| **DMPA** | 0 | 6.8 | 0 | 0 | 0 | 0 | 5.5 |
| **LB 25** | 1.9 | 0.2 | 14.7 | 14.6 | 14.7 | 14.8 | 8.7 |
| **T-12** | 0.4 | 0 | 0.2 | 0.7 | 0.7 | 0.7 | 0.4 |
| **Des I** | 0 | 50.3 | 90.4 | 0 | 146.4 | 106.1 | 0 |
| **Des W** | 144.7 | 0 | 107.4 | 161.4 | 0 | 0 | 179.6 |
| **DES H** | 0 | 0 | 0 | 0 | 0 | 34.5 | 0 |

(continued)

| Ingredients | Ex. 3 | Ex. 4 | Ex. 5 | Ex. 6 | Ex. 7 | Ex. 8 | Ex. 9 |
|---|---|---|---|---|---|---|---|
| **Perylene Dye** | 0 | 0 | 0.041 | 0.041 | 0.041 | 0.042 | 0 |
| **TEA** | 11.8 | 6.4 | 24.4 | 24.3 | 24.5 | 24.6 | 17.5 |
| **NMP** | 0 | 0 | 7.1 | 4.2 | 4.5 | 3.3 | 15.7 |
| **Theoretical NCO (%)** | 3.81 | 3.57 | 3.67 | 3.67 | 3.66 | 3.66 | 3.60 |
| **Actual NCO (%)** | 3.57 | 3.19 | 3.67 | 3.69 | 3.5 | 3.42 | 3.17 |
| **NMP, pph resin solids** | 25 | 24 | 23 | 23 | 23 | 23 | 24 |

## Examples 10-16

The prepolymer was dispersed into a mixture of water and LB 25 in a dispersion flask and agitated for five minutes. EDA and water were then added with mixing. Next, any additional chain extenders were added with water drop wise while mixing. Optionally TEA was added and the mixture was mixed for one hour at ambient conditions and filtered through a 50 µm filter. The amounts used are shown below, unless otherwise indicated, all entries are in grams.

| Ingredients | Ex.10 | Ex.11 | Ex. 12 | Ex.13 | Ex. 14 | Ex.15 | Ex. 16 |
|---|---|---|---|---|---|---|---|
| Prepolymer Ex. No. | 3 | 4 | 5 | 6 | 7 | 8 | 9 |
| Prepolymer (amount) | 475 | 216.7 | 805.2 | 804.3 | 804.5 | 813.7 | 470 |
| Water | 567.8 | 266.2 | 1290.5 | 1288 | 1288 | 1287 | 671.9 |
| LB 25 | 3.9 | 1.9 | 13.3 | 13.3 | 13.4 | 13.2 | 7.3 |
| EDA | 10.9 | 4.5 | 18.2 | 14.7 | 14.7 | 18.5 | 10.2 |
| DETA | 0 | 0 | 0 | 4.2 | 4.2 | 0 | 0 |
| Water | 43.6 | 10.7 | 72.7 | 75.7 | 75.5 | 73.9 | 40.7 |

The polyurethane dispersions had properties as shown in the table below.

| Example No. | Acid No.[1] | Solids[2] | Viscosity[3] | pH | Average Particle Size[4] |
|---|---|---|---|---|---|
| 10 | 30.1 | 35.4 | 235 | 6.7 | 0.071 |
| 11 | 37 | 33 | 145 | 7.5 | 16.3 |
| 12 | 18.7 | 30 | 50 | 8.53 | 1.62 |
| 13 | 18.7 | 30.1 | 45 | 8.34 | 0.073 |
| 14 | 37.4 | 30 | 65 | 7.8 | 3.96 |
| 15 | 37.3 | 30.2 | 95 | 7.6 | 44.9 |
| 16 | 30 | 31.57 | 485 | 7.7 | 0.143 |

[1] mg KOH/g - theoretical value
[2] wt. %, determined using a Mettler Toledo HR 73 Moisture Analyzer at 140°C for 20 minutes.
[3] cps, determined using a BROOKFIELD® Viscometer, RVT (diol), spindle No. 3, 100 rpm, at 25°C.
[4] µm, determined using a HORIBA® LA-910 particle size analyzer

Films were made from the polyurethane dispersions (PUD) as follows. 50g of the PUD was optionally mixed with a polyaziridine (XAMA 7, Bayer Polymers LLC, Pittsburgh, PA) using a mechanical stirrer. The amount of polyaziridine was 0.7 times the acid equivalent weight of the polyurethane times the equivalent weight of the polyaziridine.

A 10ml applicator bar was used to apply the polyurethane dispersions to glass plates that had been cleaned with methyl ethyl ketone. The plates were air dried for 20 minutes and baked for 10 minutes at 140°F (60°C) and further cured for 12 hours at 23°C and baked for 10 minutes at 150°C. The films were removed from the glass plates and conditioned for 24 hours at 25°C (77°F) and 55% relative humidity.

The films were then evaluated as indicated in the table below. Solvent swell was determined by cutting a film to one inch square and soaking the film in a solvent filled Petri dish for 24 hours and the increase in dimensions were measured using graph paper, 20 squares = one square inch. The linear swell factor is calculated as

$$LF = 1.0 + \frac{(\text{number of squares over 20})}{20}$$

The Lf is converted to percent volume swell.

| Ex. No: | Elongation (%)[5] | 100% Modulus (psi) [6] | Tensile Strength (psi) [7] | Gloss 60° [8] | Solvent swell (percent volume increase)[9] | | | | | |
|---|---|---|---|---|---|---|---|---|---|---|
| | | | | | water | IPA | MEK | xylene | TCE | PCE |
| 5 | 383 | 666 (4.6 MPa) | 2386 (16.4 MPa) | 78 | 0 | D[11] | D[11] | 310 | 700 | 205 |
| 5 w/ AZ[10] | 144 | 1718 (11.8 MPa) | 2885 (19.9 MPa) | 72 | 0 | 95 | 120 | 95 | 175 | 95 |
| 6 | 347 | 518 (3.6 MPa) | 1712 (11.8 MPa) | 83 | 0 | 175 | 350 | 95 | 350 | 73 |
| 6 w/ AZ[10] | 166 | 1031 (7.1 MPa) | 1833 (12.6 MPa) | 75 | 0 | 73 | 120 | 95 | 95 | 95 |

[5] determined according to ASTM 412 using an INSTRON® Model 4444 (available from Instron Corp., Canton, MA) using a crosshead speed of 20 in/min.

[6] determined according to ASTM 412 as described above.

[7] determined according to ASTM 412 as described above.

[8] determined according to ASTM D523 using a MICRO-TRI-GLOSS® Gloss Meter (Model 4520) available from BYK-Gardner GmbH, Geretaried, Germany.

[9] determined as described above

[10] cross linked with polyaziridine (PFAZ® 322 and XAMA® 7, available from Bayer Polymers LLC, Pittsburgh, PA)

[11] dissolved

The results depicted above show that crosslinking of the polymer in the PUD improves the physical properties of the resulting film, for example the film is stronger. Phisico-mechanical properties are also improved. For example, elongation is decreased, 100% modulus is substantially increased, and tensile strength is increased. Additionally, chemical and solvent resistance is improved.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

1. A two component coating composition comprising an aqueous polyurethane dispersion comprising an isocyanate functional prepolymer containing acid functional groups prepared by reacting polyols comprising polyols containing carboxylic acid functionality and a polyisocyanate, wherein the polyols have a molecular weight (Mn) of from 100 to 10,000, an acid number of 25 to 500 mg KOH/g and a hydroxyl number of from 25 to 500 mg KOH/g as a first component (i) and a second component (ii) comprising a cross-linking agent for the polyurethane which does not contain free isocyanate groups.

2. The coating composition of claim 1, wherein the polyol of component (i) is selected from the group consisting of polyester polyols, polyether polyols, polyhydroxy polycarbonates, polyhydroxy polyacetals, polyhydroxy polyacrylates, polyhydroxy polyester amides, polyhydroxy polythioethers, and mixtures thereof.

3. The coating composition of claim 1, wherein the polyol of component (i) includes a 2,2-bis-(hydroxy-methyl)-alkanecarboxylic acid having at least five carbon atoms.

4. The coating composition of claim 3, wherein the 2,2-bis-(hydroxy-methyl)-alkanecarboxylic acid is 2,2-bis-(hydroxymethyl)-propionic acid, dimethylolpropionic acid, 2,2-bis-(hydroxymethyl)-butanoic acid, and/or dimethylolbutanoic acid.

5. The coating composition of claim 1, wherein the polyol of component (i) comprises a polyesterpolyol including one or more repeat units from a 2,2-bis-(hydroxy-methyl)-alkanecarboxylic acid having at least five carbon atoms.

6. The coating composition of claim 5, wherein the 2,2-bis-(hydroxy-methyl)-alkanecarboxylic acid is 2,2-bis-(hydroxymethyl)-propionic acid, dimethylolpropionic acid, 2,2-bis-(hydroxymethyl)-butanoic acid, and/or dimethylolbutanoic acid.

7. The coating composition according to Claim 1, wherein the polyisocyanates of component (i) comprise aliphatic, cycloaliphatic, araliphatic and/or aromatic polyisocyanates containing from 2 to 5 isocyanate groups.

8. The coating composition according to Claim 1, wherein the polyisocyanates of component (i) include one or more polyisocyanates selected from the group consisting of 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4-trimethyl-1,6-diisocyanatohexane, 2,4,4-trimethyl-1,6-diisocyanatohexane, 1,10-diisocyanatodecane, 1,3- diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, ω,ω'-diisocyanato-1,3-dimethylcyclohexane, 1-isocyanato-1-methyl-3-isocyanatomethylcyclohexane, 1-isocyanato-1-methyl-4-isocyanatomethylcyclohexane, bis-(isocyanatomethyl)norbornane, 1,5-naphthalene diisocyanate, 1,3-bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

9. The coating composition according to Claim 1, wherein the polyisocyanates of component (i) include one or more polyisocyanate adducts containing biuret, urethane, uretdione, allophanate, isocyanurate, and/or iminooxadiazinedione groups.

10. The coating composition according to Claim 1, wherein the dispersion has a solids content of from 20% to 60% by weight of the dispersion.

11. The coating composition according to Claim 1, wherein the dispersion has an acid number from 27 to 240 mg KOH/g.

12. The coating composition according to Claim 1, wherein the dispersion further comprises neutralizing agents selected from amines and/or alkali metal hydroxides.

13. The coating composition according to Claim 12, wherein the amines are tertiary amines selected from the group consisting of N-methyl morpholine, trimethyl amine, triethylamine, triethanol amine, pyridine, methylpyridine, benzyldimethylamine, N,N-endoethylenepiperazine, N-methylpiperidine, pentamethyldiethylenetriamine, N,N-dimethylaminocyclohexane, N,N'-dimethylpiperazine, N,N-dimethylbenzylamine, and combinations thereof.

14. The coating composition according to Claim 1, where in after the polyol and polyisocyanate are reacted to form a prepolymer, at least one hydroxy or amine functional chain extender is reacted with the prepolymer.

15. The coating composition according to Claim 14, wherein the hydroxy functional chain extender is a polyol.

16. The coating composition according to Claim 14, wherein the amine functional chain extender is a polyamine.

17. The coating composition of claim 1, wherein the cross-linking agent of component (ii) comprises a member selected from the group consisting of urea resins, melamine resins, urea/melamine resins, polyepoxides, polyaziridines, polycarbodiimides and mixtures thereof.

**18.** The coating composition of claim 1, wherein the cross-linking agent of component (ii) comprises a polyaziridine.

**19.** The composition according to Claim 1, wherein one or both of component (i) and component (ii) further comprises one or more additives selected from the group consisting of leveling agents, wetting agents, flow control agents, antiskinning agents, antifoaming agents, fillers, viscosity regulators, plasticizers, pigments, catalysts, dyes, UV absorbers, light stabilizers, and stabilizers against thermal and oxidative degradation.

**20.** A method of coating a substrate comprising:

    (a) mixing components (i) and (ii) in the composition of Claim 10 to form a mixture; and
    (ii) applying the mixture to a surface of the substrate.

**21.** The method according to Claim 20, wherein the mixture is applied by spraying, pouring, flowcoating, brushing, squirting or rolling.

**22.** A substrate coated according to the method of claim 20.